# EUROPÄISCHE PATENTANMELDUNG

(11) **EP 3 026 018 A1**
(43) Veröffentlichungstag der Anmeldung: **01.06.2016**
(21) Anmeldenummer: 14194632.7
(22) Anmeldetag: 25.11.2014
(51) Int. Cl.: C01G 25/02, C01B 13/34, C01F 17/00

(54) **Verfahren zur Herstellung Metalloxiden mittels Spraypyrolyse**

(71) Anmelder: Evonik Degussa GmbH, 45128 Essen (DE)
(72) Erfinder: Katusic, Stipan, 65812 Bad Soden (DE); Kress, Peter, 63791 Karlstein (DE); Alff, Harald, 63796 Kahl (DE); Wiegand, Armin, 63538 Großkrotzenburg (DE)

(57) **Zusammenfassung**

Verfahren zur Herstellung eines Metalloxidpulvers mittels Spraypyrolyse, bei dem man ein Gemisch enthaltend Ammoniak und ein Aerosol, welches durch Verdüsen einer eine Metallverbindung enthaltenden Lösung mittels eines Zerstäubungsgases erhalten wird, in eine Hochtemperaturzone eines Reaktionsraumes einbringt und dort in einer sauerstoffenthaltenden Atmosphäre zur Reaktion bringt und nachfolgend den Feststoff abtrennt.

## Beschreibung

Die Erfindung betrifft ein Verfahren zur Herstellung Metalloxiden mittels Spraypyrolyse.

Spraypyrolyse und Flammenspraypyrolyse sind etablierte Verfahren zur Herstellung von Metalloxiden. Bei einer Spraypyrolyse werden Metallverbindungen in Form feiner Tröpfchen in eine Zone hoher Temperatur eingebracht, wo sie oxidiert und/oder hydrolysiert werden und Metalloxide liefern. Eine besondere Form dieses Verfahrens stellt die Flammenspraypyrolyse dar, bei der die Tröpfchen einer Flamme zugeführt werden, die durch Zündung eines Brenngases und eines Sauerstoff enthaltenden Gases gebildet wird.

Dem Fachmann stehen zahlreiche Reaktionsparameter zur Verfügung um die physikalischchemischen Eigenschaften der hergestellten Metalloxide zu variieren. So nehmen Temperatur, Konzentration der Metallverbindung, Verweilzeit und Geschwindigkeit des Reaktionsgemisches Einfluß auf die Struktur der Metalloxide.

Insbesondere bei der Übertragung in einen großtechnischen Maßstab ist festzustellen, dass unerwünschte Produkte beispielsweise in Form von Hohlkugeln gebildet werden oder dass die Größenverteilung der Metalloxidpartikel extrem breit ist. Es wird daher nach Verfahren gesucht, die diese Nachteile minimieren.

Gegenstand der vorliegenden Erfindung ist ein Verfahren zur Herstellung eines Metalloxidpulvers mittels Spraypyrolyse, bei dem man ein Gemisch enthaltend Ammoniak und ein Aerosol, welches durch Verdüsen einer eine Metallverbindung enthaltenden Lösung mittels eines Zerstäubungsgases, bevorzugt Stickstoff oder Luft, erhalten wird, in eine Hochtemperaturzone eines Reaktionsraumes einbringt und dort in einer sauerstoffenthaltenden Atmosphäre zur Reaktion bringt und nachfolgend den Feststoff abtrennt.

Von den erfindungsgemäßen Verfahren kann ausgenommen sein ein Verfahren zur Herstellung von Metalloxidpulvern der Zusammensetzung LiₓLa₃Zr₂M_{y}O_{8,5+0,5x+z} mit 6,5 ≤ x ≤ 8, 0 ≤ y ≤ 0,5, z = 2y für M = Hf, Ga, Ge, Nb, Si, Sn, Sr, Ta,Ti; z = 1,5y für M = Sc, V, Y; z = y für M = Ba, Ca, Mg, Zn, mittels Spraypyrolyse, bei dem man ein Gemisch enthaltend Ammoniak und ein Aerosol, wobei das Aerosol eine Metallverbindung und ein Zerstäubungsgas enthält, in eine Hochtemperaturzone eines Reaktionsraumes einbringt und dort in einer sauerstoffenthaltenden Atmosphäre zur Reaktion bringt und nachfolgend den Feststoff abtrennt.

Von den erfindungsgemäßen Verfahren kann ebenfalls ausgenommen sein, ein Verfahren zur Herstellung eines Metalloxidpulvers der Zusammensetzung LiₓLa₃Zr₂Al_{y}O_{8,5+0,5x+1,5y} mit 6 ≤ x ≤ 7, 0,2 ≤ y ≤ 0,5, bei dem man eine Lösung oder mehrere Lösungen enthaltend jeweils ein oder mehrere Verbindungen des Lithiums, Lanthans, Aluminiums und des Zirkons in einer Konzentration entsprechend der Stöchiometrie und in Form feiner Tröpfchen in eine in einem Reaktionsraum brennende Flamme einbringt, die gebildet wird, indem man ein Sauerstoff enthaltendes Gas und ein bei der Reaktion mit Sauerstoff Wasser bildendes Brenngas in den Reaktionsraum einbringt und dort zündet und nachfolgend den Feststoff von dampf- oder gasförmigen Stoffen abtrennt.

Die Konzentration von Ammoniak beträgt bevorzugt 0,5 - 5,0 kg NH₃ / kg der eingesetzten Metalle, besonders bevorzugt 1,5 - 3,5 kg/kg. Innerhalb dieser Bereiche ist der Einfluß auf die Homogenität der herzustellenden Metalloxidpartikel am größten.

In einer bevorzugten Ausführungsform ist die Hochtemperaturzone, in die das Gemisch eingebracht wird, eine Flamme, die durch die Reaktion eines Sauerstoff enthaltenden Gases und eines Brenngases, bevorzugt bei der Reaktion mit Sauerstoff Wasser bildendes Brenngas, gebildet wird.

Als Brenngas kann Wasserstoff, Methan, Ethan, Propan, Butan und deren Gemische eingesetzt werden. Bevorzugt wird Wasserstoff eingesetzt.

Das Sauerstoff enthaltende Gas ist in der Regel Luft. Die Menge an Sauerstoff ist bei dem erfindungsgemäßen Verfahren so zu wählen, dass sie mindestens zur vollständigen Umsetzung des Brenngases und aller Metallverbindungen ausreicht. Es ist in der Regel vorteilhaft einen Überschuß an Sauerstoff einzusetzen. Dieser Überschuß wird zweckmäßigerweise ausgedrückt als das Verhältnis von vorhandenem Sauerstoff / Verbrennung des Brenngases notwendiger Sauerstoff und als lambda bezeichnet. Lambda beträgt bevorzugt 1,5 bis 6,0, besonders bevorzugt 2,0 bis 4,0.

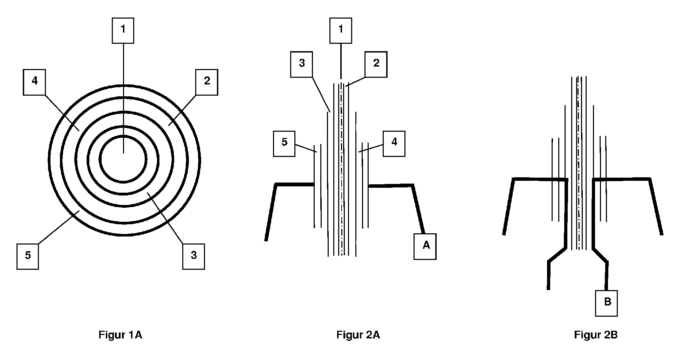

Figur 1, 2A und 2B zeigen schematisch mögliche Anordnung zum Einbringen der Einsatzstoffe in den Rektionsraum, wobei gilt: 1 = Metallverbindung enthaltende Lösung, 2 = Zerstäubungsgas, 3 = Ammoniak, 4 = Luft, 5 = Brenngas, A = Wand Reaktionsraum.

Eine besondere Ausführungsform sieht vor, dass innerhalb des Reaktionsraumes die Flamme und das Gemisch wenigstens teilweise räumlich getrennt voneinander sind. Figur 2B zeigt schematisch eine solche Anordnung, bei der eine Glocke B das in den Reaktionsraum eingebrachte Gemisch umgibt. Die so hergestellten Metalloxidpartikel weisen eine besonders hohe Homogenität bezüglich der Partikelgrößenverteilung auf.

Der positive Effekt bezüglich der Homogenität, kann weiterhin dadurch verstärkt werden, wenn bei dieser Ausführungsform die mittlere Geschwindigkeit der Flamme, v_{Flamme} größer ist als die mittleren Geschwindigkeit des Gemisches v_{Gemisch}. Besonders bevorzugt ist 2 ≤ < V_{Flamme}/V_{Gemisch} ≤ 10, ganz besonders bevorzugt 3 ≤ v_{Flamme}/v_{Gemisch} ≤ 5 ist. Bei den Angaben zur Geschwindigkeit handelt es sich um normierte Geschwindigkeiten. Sie ergeben sich durch Division des Volumenstromes mit der Einheit Nm³/h und der Querschnittsfläche.

Bei dem erfindungsgemäßen Verfahren werden die Lösung oder die Lösungen in Form feiner Tröpfchen in den Reaktionsraum eingebracht. Bevorzugt weisen die feinen Tröpfchen eine mittlere Tröpfchengröße 1 - 120 µm, besonders bevorzugt von 30 - 100 µm auf. Zur Erzeugung der Tröpfchen werden üblicherweise Ein- oder Mehrdüsen eingesetzt.

Um die Löslichkeit zu Erreichen und um eine geeignete Viskosität für das Zerstäuben der Lösung zu erzielen kann die Lösung erwärmt werden. Prinzipiell sind alle löslichen Metallverbindungen einsetzbar, die oxidierbar sind.

Die Metallkomponente der Metallverbindung wird bevorzugt aus der Gruppe bestehend aus Ag, Al, B, Ba, Ca, Cd, Co, Cr, Cu, Fe, Ga, Ge, Hf, In, Li, Mg, Mn, Mo, Nb, Ni, Pd, Rh, Ru, Sc, Si, Sn, Sr, Ta, Ti, V, Y und Zn ausgewählt. Prinzipiell können auch mehrere Metallkomponenten eingesetzt werden, so dass Mischoxide erhalten werden.

Dabei kann es sich um anorganische Metallverbindungen, wie Nitrate, Chloride, Bromide, oder organische Metallverbindungen, wie Alkoxide oder Carboxylate anorganische und/oder organische Metallverbindungen handeln. Als Alkoxide können bevorzugt Ethylate, n-Propylate, iso-Propylate, n-Butylate und/oder tert.-Butylate eingesetzt werden. Als Carboxylate können die der Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure und/oder Laurinsäure zugrundeliegenden Verbindungen eingesetzt werden. Aus der Gruppe der organischen Metallverbindungen werden bevorzugt 2-Ethlyhexanoate oder Laurate eingesetzt. Die Lösung kann ein oder mehrere anorganische Metallverbindungen, ein oder mehrere organische Metallverbindungen oder Mischungen von anorganischen und organischen Metallverbindungen enthalten.

In einer bevorzugten Ausführungsform ist wenigstens eine Metallverbindung ein Nitrat. Die so hergestellten Metalloxidpartikel weisen eine besonders hohe Homogenität bezüglich der Partikelgrößenverteilung auf.

Bei den Lösungsmitteln kann bevorzugt aus der Gruppe bestehend aus Wasser, C₅-C₂₀-Alkanen, C₁-C₁₅-Alkancarbonsäuren und/oder C₁-C₁₅-Alkanolen ausgewählt werden. Als organische Lösungsmittel, beziehungsweise als Bestandteil von organischen Lösungsmittelgemischen, können bevorzugt Alkohole wie Methanol, Ethanol, n-Propanol, iso-Propanol, n-Butanol oder tert.-Butanol, Diole wie Ethandiol, Pentandiol, 2-Methyl-2,4-pentandiol, C₁-C₁₂-Carbonsäuren wie beispielsweise Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure, Laurinsäure eingesetzt werden. Weiterhin können Benzol, Toluol, Naphtha und/oder Benzin eingesetzt werden.

Vorzugsweise werden wässerige Lösungen eingesetzt, wobei unter einer wässerige Lösung eine Lösung zu verstehen ist, bei der Wasser der Hauptbestandteil eines Lösungsmittelgemisches ist oder bei der allein Wasser das Lösungsmittel ist.

Die Konzentration der eingesetzten Lösungen ist nicht besonders limitiert. Liegt nur eine Lösung vor, die alle Mischoxidkomponenten enthält, beträgt die Konzentration in der Regel 1 bis 50 Gew.-%, bevorzugt 3 bis 30 Gew.-%, ganz besonders bevorzugt 5 - 20 Gew.%, jeweils bezogen auf die Summe der Oxide.

### Beispiele

Die BET-Oberfläche wird bestimmt nach DIN ISO 9277. Der d₅₀-Wert resultiert aus der Summendurchgangsverteilungskurve der volumengemittelten Grössenverteilung. Diese wird in üblicher Weise durch Laserbeugung ermittelt. Im Rahmen der vorliegenden Erfindung wird hierzu ein Gerät Cilas 1064 der Firma Cilas eingesetzt. Unter einem d₅₀-Wert wird verstanden, dass 50% der Partikel innerhalb des angegebenen Grössenbereichs liegen.

Als Metallverbindungen werden die jeweiligen Nitrate eingesetzt. Es werden jeweils Beispiele ohne Ammoniak (Suffix 0; Vergleichsbeispiele) und mit Ammoniak (Suffix 1, erfindungsgemäße Beispiele) durchgeführt.

### Beispiel Mn₀

2 kg/h einer Lösung von Mangannitrat mit einer Konzentration an Mangan von 15,3 Gew.-% werden mit 5 Nm³/h Luft als Zerstäubergas mittels einer Zweistoffdüse in eine in einem Reaktionsraum hinein brennende Flamme zerstäubt. Die Flamme wird gebildet durch die Reaktion von 10 Nm³/h Wasserstoff und 30 Nm³/h Luft. Nach Abkühlung wird das Metalloxidpulver an einem Filter von gasförmigen Stoffen abgetrennt.

Analog werden die Beispiele Co₀, Ni₀, Zr₀, La₀, Al₀ und Ce₀ durchgeführt. Einsatzstoffmengen sind in der Tabelle wiedergegeben.

### Beispiel Mn₁

Wie Mn₀, jedoch werden neben der Lösung und der Zerstäuberluft zusätzlich 0,6 kg/h Ammoniak in den Reaktionsraum zerstäubt.

Analog werden die Beispiele Co₁, Ni₁, Zr₁, La₁, Al₁ und Ce₁ durchgeführt. Einsatzstoffmengen sind in der Tabelle wiedergegeben.

Die nach dem erfindungsgemäßen Verfahren hergestellten Metalloxidpulver weisen niedrigere Werte für BET-Oberfläche und mittlerer Partikelgrößenverteilung auf.

**Tabelle: Einsatzstoffe und Reaktionsbedingungen; Stoffeigenschaften**

| **Beispiel** | | **Mn₀** | **Mn₁** | **Co₀** | **Co₁** | **Ni₀** | **Ni₁** | **Zr₀** | **Zr₁** | **La₀** | **La₁** | **Al₀** | **Al₁** | **Ce₀** | **Ce₁** |
|---|---|---|---|---|---|---|---|---|---|---|---|---|---|---|---|
| Lösung | kg/h | 2 | 2 | 2 | 2 | 2 | 2 | 4 | 4 | 3 | 3 | 4 | 4 | 4 | 4 |
| Konz. Metall | Gew.-% | 15,3 | 15,3 | 14,6 | 14,6 | 14,4 | 14,4 | 6,5 | 6,5 | 9,6 | 9,6 | 4,0 | 4,0 | 6,0 | 6,0 |
| Zerstäuberluft | Nm³/h | 5 | 5 | 5 | 5 | 5 | 5 | 5 | 5 | 5 | 5 | 5 | 5 | 5 | 5 |
| Ammoniak | kg/h | 0 | 0,6 | 0 | 0,6 | 0 | 0,6 | 0 | 0,6 | 0 | 0,6 | 0 | 0,6 | 0 | 0,6 |
| Ammoniak/ Metall | kg/kg | 0 | 1,96 | 0 | 2,05 | 0 | 2,08 | 0 | 2,31 | 0 | 2,08 | 0 | 3,75 | 0 | 2,50 |
| Wasserstoff | Nm³/h | 10 | 12 | 10 | 12 | 10 | 12 | 12 | 12 | 12 | 12 | 12 | 12 | 12 | 12 |
| Primärluft | Nm³/h | 30 | 30 | 30 | 30 | 30 | 30 | 30 | 30 | 30 | 30 | 30 | 30 | 30 | 30 |
| Lambda | | 1,68 | 1,40 | 1,68 | 1,40 | 1,68 | 1,40 | 1,40 | 1,40 | 1,40 | 1,40 | 1,40 | 1,40 | 1,40 | 1,40 |
| v_{Gemisch} | Nm/s | 0,33 | 0,40 | 0,32 | 0,39 | 0,32 | 0,39 | 0,41 | 0,46 | 0,39 | 0,43 | 0,44 | 0,48 | 0,44 | 0,48 |
| v_{Flamme} | Nm/s | 1,42 | 1,64 | 1,39 | 1,60 | 1,36 | 1,59 | 1,52 | 1,56 | 1,53 | 1,63 | 1,59 | 1,65 | 1,58 | 1,64 |
| v_{Flamme}/v_{Gemisch} | | 4,3 | 4,1 | 4,3 | 4,1 | 4,3 | 4,1 | 3,7 | 3,4 | 3,9 | 3,8 | 3,6 | 3,4 | 3,6 | 3,4 |
| T_{Flamme}^{a)} | °C | 646 | 742 | 623 | 712 | 611 | 708 | 636 | 659 | 663 | 700 | 683 | 708 | 674 | 700 |
| BET-Oberfläche | m²/g | 4,3 | 3,2 | 4,3 | 3,7 | 13,0 | 9,3 | 7,0 | 6,0 | 8,2 | 7,3 | 12,0 | 12,0 | 5,7 | 5,2 |
| d₁₀ | µm | 0,10 | 0,09 | 0,24 | 0,09 | 0,21 | 0,07 | 0,41 | 0,36 | 0,36 | 0,31 | 0,78 | 0,75 | 0,20 | 0,16 |
| d₅₀ | µm | 0,25 | 0,21 | 0,38 | 0,18 | 0,59 | 0,42 | 3,53 | 3,01 | 2,29 | 1,68 | 6,80 | 5,64 | 1,22 | 0,95 |
| d₉₀ | µm | 0,10 | 0,09 | 0,24 | 0,09 | 0,21 | 0,07 | 0,41 | 0,36 | 0,36 | 0,31 | 0,78 | 0,75 | 0,20 | 0,16 |

| | | | | | | | | | | | | | | | |
|---|---|---|---|---|---|---|---|---|---|---|---|---|---|---|---|
| a) Flammentemperatur; gemessen 10 cm unterhalb des Einspeisungspunktes von Luft und Wasserstoff in den Reaktionsraum; | | | | | | | | | | | | | | | |

## Patentansprüche

1. Verfahren zur Herstellung eines Metalloxidpulvers mittels Spraypyrolyse, **dadurch gekennzeichnet, dass** man
ein Gemisch enthaltend Ammoniak und ein Aerosol, welches durch Verdüsen einer eine Metallverbindung enthaltenden Lösung mittels eines Zerstäubungsgases erhalten wird, in eine Hochtemperaturzone eines Reaktionsraumes einbringt und
dort in einer sauerstoffenthaltenden Atmosphäre zur Reaktion bringt und
nachfolgend den Feststoff abtrennt.

2. Verfahren nach Anspruch 1, **dadurch gekennzeichnet, dass**
die Konzentration von Ammoniak 0,5 - 5,0 kg NH₃ / kg des eingesetzten Metalls beträgt.

3. Verfahren nach den Ansprüchen 1 oder 2, **dadurch gekennzeichnet, dass**
die Hochtemperaturzone, in die das Gemisch eingebracht wird, eine Flamme ist, die durch die Reaktion eines Sauerstoff enthaltenden Gases und eines Brenngases gebildet wird.

4. Verfahren nach Anspruch 3, **dadurch gekennzeichnet, dass**
innerhalb des Reaktionsraumes die Flamme und das Gemisch wenigstens teilweise räumlich getrennt voneinander sind.

5. Verfahren nach Anspruch 4, **dadurch gekennzeichnet, dass**
für das Verhältnis mittlere Geschwindigkeit der Flamme zu mittlerer Geschwindigkeit des Gemisches gilt: 2 ≤ v_{Flamme}/v_{Gemisch} ≤ 10.

6. Verfahren nach den Ansprüchen 1 bis 5, **dadurch gekennzeichnet, dass**
wenigstens eine Metallverbindung ein Nitrat ist.

7. Verfahren nach den Ansprüchen 1 bis 6, **dadurch gekennzeichnet, dass**
die Metallkomponente der Metallverbindungen ausgewählt aus der Gruppe bestehend aus Ag, Al, B, Ba, Ca, Cd, Co, Cr, Cu, Fe, Ga, Ge, Hf, In, Li, Mg, Mn, Mo, Nb, Ni, Pd, Rh, Ru, Sc, Si, Sn, Sr, Ta, Ti, V, Y und Zn eingesetzt werden.
